(19) Europäisches Patentamt
European Patent Office
Office européen des brevets

(11) EP 1 705 503 B1

(12) **EUROPEAN PATENT SPECIFICATION**

(45) Date of publication and mention
of the grant of the patent:
**30.04.2008 Bulletin 2008/18**

(51) Int Cl.:
*G02B 6/10* (2006.01)     *G02B 6/02* (2006.01)
*G02B 6/024* (2006.01)

(21) Application number: **05251330.6**

(22) Date of filing: **04.03.2005**

(54) **A chiral optical waveguide**

Chiraler Lichtwellenleiter

Guide d'ondes optique chirale

(84) Designated Contracting States:
**DE FR GB**

(43) Date of publication of application:
**27.09.2006 Bulletin 2006/39**

(73) Proprietor: **FUJITSU LIMITED**
**Kawasaki-shi,**
**Kanagawa 211-8588 (JP)**

(72) Inventors:
• **Parker, Michael Charles**
  **Colchester, Essex C034HG (GB)**
• **Hisatomi, Makiko**
  **Kesgrave, Suffolk IP5 2EQ (GB)**

• **Walker, Stuart Douglas**
  **Colchester, Essex, CO3 0JT (GB)**

(74) Representative: **Critten, Matthew Peter**
   **Abel & Imray**
   **20 Red Lion Street**
   **London, WC1R 4PQ (GB)**

(56) References cited:
**US-A- 4 017 288**     **US-A1- 2002 131 707**
**US-B1- 6 778 747**

• **PATENT ABSTRACTS OF JAPAN vol. 009, no. 013 (P-328), 19 January 1985 (1985-01-19) -& JP 59 160101 A (NIPPON DENSHIN DENWA KOSHA), 10 September 1984 (1984-09-10)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to the field of optical waveguides, including optical fibres.

Optical fibres are typically very long strands of glass, plastic or other suitable material. In cross-section, an optical fibre typically comprises a central core region surrounded by an annular cladding, which in turn is often surrounded by an annular jacket that protects the fibre from mechanical damage. Light is guided in the fibre by virtue of a difference in refractive index between the core and the cladding: the cladding is of a lower refractive index than the core and so light introduced into the core can be confined there by total internal reflection at the core-cladding boundary.

Many variants of optical waveguide are known. For example, some fibres have a cladding that comprises far more complicated pattern of steps in refractive index or a cladding that has a refractive index profile that varies smoothly from the core in some manner. Some fibres each have more than one core.

The different refractive indices of the core and cladding usually result from a difference in the concentration of dopants between those parts of the fibre; however, in some fibres, the different refractive indices result from different distributions of holes in the cladding and the core. Such fibres are examples of a class of waveguides often called "microstructured fibres", "holey fibres" or "photonic crystal fibres". In some cases, guidance of light in the fibre does not result from total internal reflection but from another mechanism such as the existence of a photonic band gap resulting from the distribution of holes in the cladding.

Other examples of microstructured fibres include fibres having cladding regions comprising concentric (solid) regions of differing refractive index.

Recently, there has been interest in the properties of light with orbital angular momentum (OAM). OAM can be considered to be a higher-order form of circular polarisation, since circular polarisation comes in only 2 varieties: left- and right-handed polarisation, valued at either $\pm\hbar$, where $\hbar = h/2\pi$, and $h$ is the Planck constant. Light with OAM still has a circular symmetry, but can be valued at integer multiples of $\hbar$, such that it is either $\pm l\hbar$, where $l$ is an integer. In addition, there has been speculation regarding the possibility of waveguiding such 'twisted light' so that the OAM is preserved within the waveguide.

In addition, the study of singular optics has been the subject of increasing scientific interest, resulting in recent descriptions of the production of high orbital angular momentum (OAM) photons, which may be used as optical tweezers, or in cryptographic data transmission.

US 6,778,747 discloses a single mode waveguide fiber and a method of making a single mode or multimode waveguide fiber which has an azimuthally and radially asymmetric core. This asymmetry is said to provide additional degrees of freedom for use in forming a waveguide having particular performance characteristics.

An object of the invention is to provide a chiral waveguide that supports propagation of light with orbital angular momentum $|l| \geq 1$ of one handedness but does not support propagation of light of the opposite handedness.

According to a first aspect of the invention, there is provided an optical waveguide having the features set out in claim 1 below.

A discontinuity in refractive index is a region at which the refractive index changes over a very short distance from a relatively high value $n_2$ to a relatively low value $n_1$: theoretically, it would be an infinitely steep change between the two values but of course in practice the change occurs over a finite distance.

A radial discontinuity is a discontinuity that extends in the direction of a radius from the centre (or substantially the centre) of the core. The radial discontinuity may start at the centre of the core or it may start away from the centre of the core, at another point on a radius.

The azimuthal angle e is the angle between the radial discontinuity (or any chosen radial discontinuity, if there is more than one) and another radial direction.

The variation in refractive index may be taken to be a variation in the local refractive index at points in the core or, in the case of a waveguide having a holey or similarly microstructured core, it may be taken to be a variation in the effective refractive index at points in the core (the effective refractive index being the refractive index resulting from the net effect of local microstructure).

The variation in refractive index may be monotonic (increasing or decreasing) with azimuthal angle, over 360 degrees, from the first value $n_2$ to the second value $n_1$. The variation may be linear (increasing or decreasing) with azimuthal angle, over 360 degrees, from the first value $n_2$ to the second value $n_1$.

The waveguide may be an optical fibre.

Preferably, the waveguide further comprises a cladding, surrounding the core. The cladding may have a refractive index $n_3$ that is less than $n_1$ and $n_2$. Alternatively, the cladding may have a refractive index $n_3$ that is greater than $n_1$ and $n_2$. The discontinuity may reach the cladding or may stop short of the cladding.

Due to the refractive-index variation within the core, light may follow a left- or right-handed spiral as it propagates along the length of the waveguide.

The waveguide may further comprise a region into which the discontinuity does not extend, which is at (or substantially at) the centre of the core. The region may be a cylinder. The cylinder may be concentric with the core. The cylinder may be concentric with the waveguide. The region may have a refractive index of, for example, $n_1$, $n_2$, $n_3$, or of another index $n_4$. The region may be a hole.

The discontinuity may be uniform along the length of the waveguide. Thus the waveguide may be of uniform cross-section along its length.

The discontinuity may rotate along the whole or part of the length of the waveguide.

The waveguide may comprise a first longitudinal section in which the index variation from $n_2$ to $n_1$ has a first handedness (e.g. increasing with clockwise increase in azimuthal angle when viewed along a direction looking into an end of the section into which light is to be introduced, which is a left-handed variation from that viewpoint) and a second longitudinal section in which the index variation from $n_2$ to $n_1$ has a second, opposite, handedness (e.g. decreasing with clockwise increase in azimuthal angle when viewed from the same direction, which is a right-handed variation from that viewpoint). There may be a plurality of pairs of such oppositely handed sections. Equal lengths of such oppositely handed sections may be concatenated to form the waveguide. Concatenated equal-length sections may provide a quarter-period coupling length to achieve coupling between different modes of light.

The refractive index of the waveguide may vary radially. The refractive-index variation may result in concentric zones in the transverse cross-section of the fibre. The concentric zones may be annuli. The annuli may be of equal width, in which case the zones may form a Bragg zone plate. Alternatively, successive annuli may be of decreasing width, in which case the zones may form a Fresnel zone plate. (A Fresnel zone plate is a well-known optical device in which the outer radius of the nth annulus from the centre of the plate is given by $r_n = \sqrt{n} \cdot r_1$, where $r_1$ is the outer radius of the central area of the plate.)

There may be a plurality of radial discontinuities. The radial discontinuities may be at different azimuthal angles; for example, the discontinuities may be displaced by x degrees in successive zones at increasing radii, where x is selected from the following list: 180˚, 90˚, 72˚, 60˚, 45˚, 30˚. There may be a refractive-index variation resulting in concentric zones in the transverse cross-section of the fibre; the radial discontinuities may be in different zones.

According to a second aspect of the invention there is provided a method of transmitting light having a left- or right-handed non-zero orbital angular momentum, the method being characterised by introducing the light into a waveguide according the first aspect of the invention, the variation of refractive index with increasing azimuthal angle being such as to support propagation of light having the handedness of the transmitted light.

Thus, right-handed light may be introduced into a core having a refractive index that decreases as the azimuthal angle increases in a clockwise direction, viewed in the direction of propagation of the light. Alternatively, left-handed light may be introduced into a core having a refractive index that increases as the azimuthal angle increases in a clockwise direction, viewed in the direction of propagation of the light. The orbital angular momentum of the light may thus be preserved during propagation in the waveguide.

Embodiments of the invention will now be described by way of example only with reference to the accompanying drawings, of which:

Fig. 1 is schematic cross-sections of two waveguides according to the invention, the fibres in (a) and (b) being of opposite handedness;
Fig. 2 is schematic cross-sections of two further waveguides according to the invention, the fibres in (a) and (b) being of opposite handedness;
Fig. 3 is (a) a schematic diagram of a chiral azimuthal GRIN fibre with light trajectory and (b) its refractive-index profile;
Fig. 4 is (a) a right-angled triangle for an "unwrapped" helix and (b) a minimum-radius logarithmic spiral (quasi-helical) trajectory, featuring radial shifts at the refractive index discontinuity;
Fig. 5 is a schematic cross section of another waveguide according to the invention;
Fig. 6 is a schematic cross section of another waveguide according to the invention;
Fig. 7 is a schematic cross section of another waveguide according to the invention;
Fig. 8 is a schematic cross section of another waveguide according to the invention;

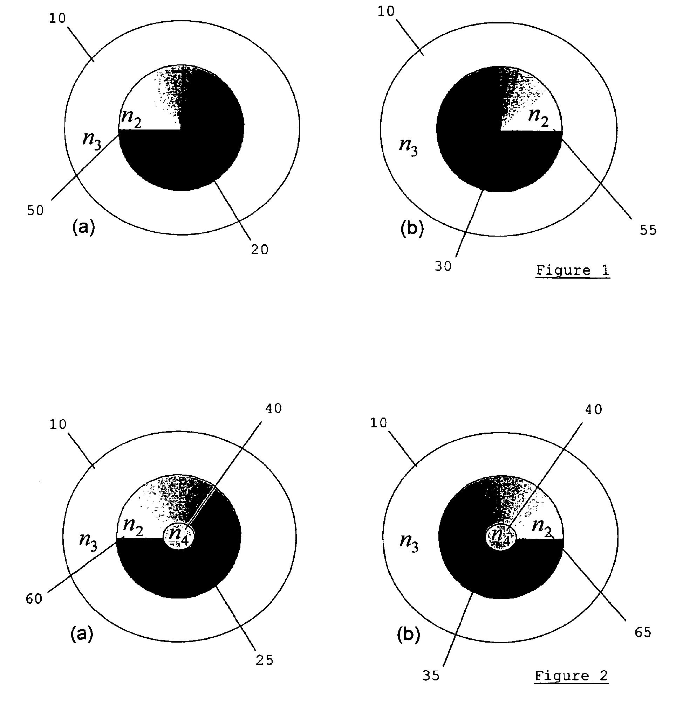

An example embodiment of the invention is a microstructured fibre (MSF) design based on a chiral, refractive-index pattern in the fibre core that varies azimuthally, in contrast to the conventional radially varying refractive-index pattern. The fibre (Fig. 1) has a core 20 with azimuthally-varying local refractive indices, within a cladding 10 of uniform refractive index. The azimuthally (angularly) graded refractive index has a step discontinuity along one radial edge 50. The refractive index (RI) decreases from a hign refractive index $n_2$ along the radial edge 50, to a lower refractive index $n_1$ as the azimuthal (polar) angle θ is increased. In this particular embodiment, the core 20 of the waveguide is contained within a concentric cladding 10 of higher refractive index $n_3$ ($>n_1, n_2$).

Light is guided within the fibre as a result of the chiral refractive index gradient. Light of the appropriate OAM follows a logarithmic helical trajectory (i.e. a vortex) with a reducing radius of rotation, whilst OAM remains conserved. Hence the light is confined by the azimuthally-varying index distribution, so that it is continually 'focused' into a tight vortex or helix, and cannot escape. However, light of the opposite handedness or chirality follows a helical trajectory with an ever increasing radius. Eventually, the radius of the helix is greater than that of the core, such that the light exits the core and is radiated away. Hence, light of this opposite handedness is not guided by the fibre, but radiates out.

The light bends to follow the refractive index gradient within the core 20, so that its trajectory follows a handed spiral as it propagates along the length of the fibre. The discontinuity along the radial edge 50 does not affect the propagation of the light, as there is an assumption of uniformity of azimuthal gradient across the discontinuity 50. Since the equation governing the light trajectory in a graded index (GRIN) medium tends to depend on the rate of change of refractive index, a perfect index discontinuity doesn't tend to affect the propagation (trajectory) of the light. The handedness of the trajectory spiral is uniquely determined by the handedness of the refractive index gradient. Hence, if light of an appropriate orbital angular momentum is launched into the fibre, guidance of the light will be supported. The OAM (and its handedness) will be conserved during propagation. Light of opposite handedness will not be guided and will radiate away.

The fibre is inherently handed in nature, which allows it to support propagation of light of only a single chirality.

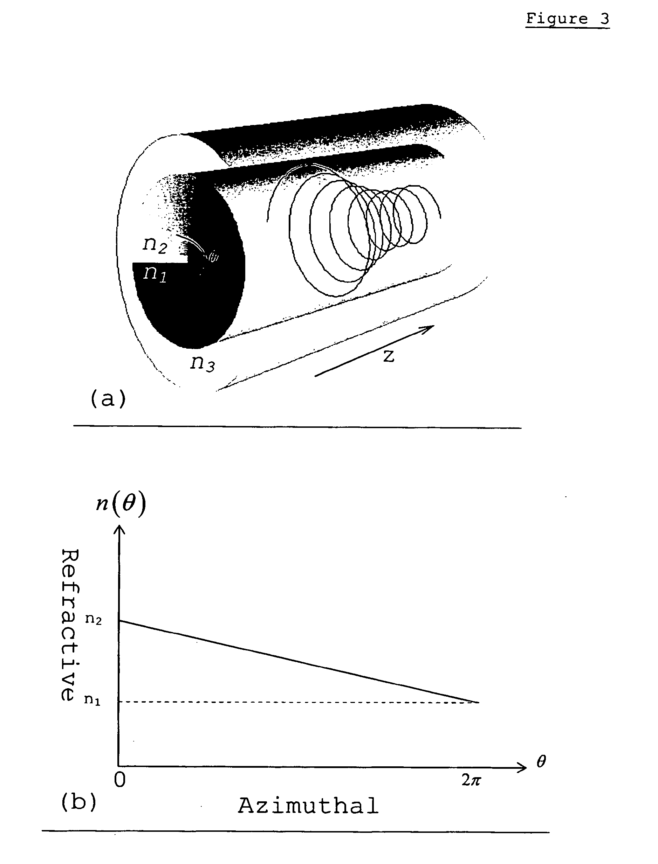

By way of explanation only and without limiting effect, we now explain our present understanding of the physics underlying the invention. In our analysis, we perform a variational calculus analysis of light propagation in a chiral fibre according to the invention. Fig. 3 shows a schematic diagram of the fibre and its refractive index profile as a function of azimuthal angle θ.

Propagation of light is analysed using Fermat's principle of least time. This not only has the advantage of reduced computational effort compared with beam propagation model analysis, but also yields a deeper insight into the waveguiding properties of our device. Equation (1) describes the trajectory s of a light ray in a medium with refractive index distribution $n(\underline{x})$ as a function of Cartesian space $\underline{x}$, which we transform into cylindrical coordinates ($r$, θ, $z$) for ease of analysis.

$$\frac{d}{ds}\left( n(\underline{x})\frac{d\underline{x}}{ds} \right) = \nabla n(\underline{x}) \qquad (1)$$

Equation (1) in cylindrical coordinates can be written as:

$$\left\{ \frac{d}{ds}\left( n\frac{dr}{ds} \right) - nr\left( \frac{d\theta}{ds} \right)^2 \right\}\hat{\underline{r}} + \left\{ n\frac{dr}{ds}\frac{d\theta}{ds} + \frac{d}{ds}\left( nr\frac{d\theta}{ds} \right) \right\}\hat{\underline{\theta}} + \left\{ \frac{d}{ds}\left[ n\left( \frac{dz}{ds} \right) \right] \right\}\hat{\underline{z}} = \frac{dn}{dr}\hat{\underline{r}} + \frac{l}{r}\frac{dn}{d\theta}\hat{\underline{\theta}} + \frac{dn}{dz}\hat{\underline{z}}$$

$$(2)$$

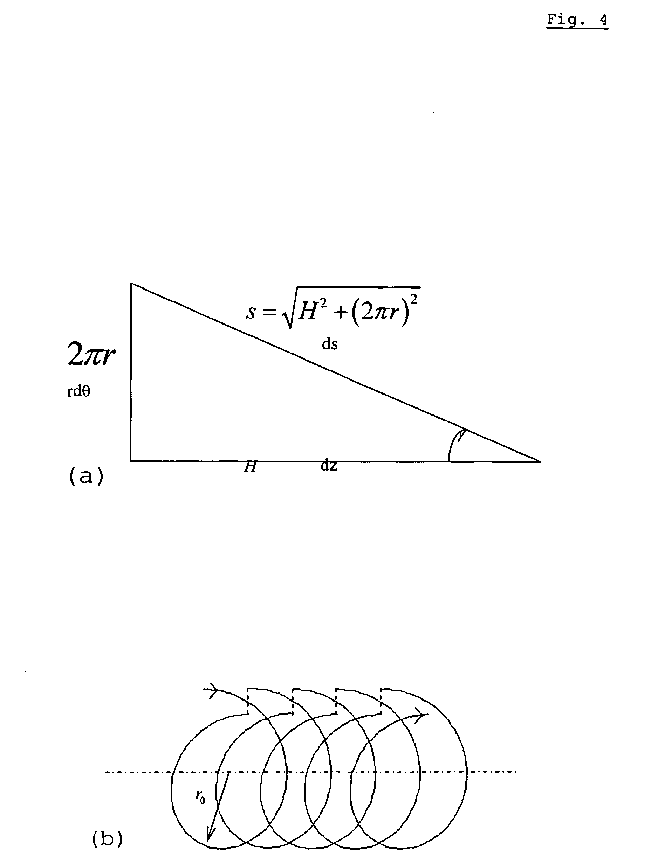

For the azimuthal GRIN geometry in which we are interested, we can assume that $\dfrac{dn}{dr} = \dfrac{dn}{dz} = 0$ . In addition, we assume that light propagates along the fibre in an approximately helical trajectory. A helical trajectory lies on the surface of a cylinder, which when 'unwrapped' forms a right-angle triangle, as illustrated in Fig. 4(a). Given one turn of the helix of radius $r$, and length (i.e. pitch) H along the $\hat{\underline{z}}$-direction (i.e. direction of propagation), then the length of the trajectory $s$ is simply given by $s^2 = H^2 + (2\pi r)^2$.

In addition, the helix can be characterised by the angle γ, such that $\cos \gamma = \dfrac{H}{s} = \dfrac{dz}{ds}$ . Using this feature of a helix, we can define the operator identity:

$$\frac{d}{ds} = \cos \gamma \frac{d}{dz} \qquad (3)$$

We also note that the quantity $n\dot{\theta}r^2$ (where $\dot{\theta} = d\theta/dz$) is proportional to the OAM of the trajectory:

$$L = \hbar k \dot{\theta} r^2 = l\hbar \qquad (4)$$

and hence is both conserved and a constant of the motion, where $k$ is the propagation constant of the light. We also note that the OAM is an integer multiple $l$ of $\hbar$. Rather than just assuming a constant radius helical trajectory, we can explore more possible trajectory solutions to the differential equations (2) by considering a logarithmic spiral (i.e. an approximately helical trajectory, but with varying radius). A logarithmic spiral is described by the expression $dr=-\beta nrd\theta$, where the radius $r$ changes with azimuthal angle $\theta$, with $\beta$ being the constant of the proportionality, equal to zero for a perfect helix. Applying the operator (3) to the equation for a logarithmic spiral, we yield:

$$\frac{dr}{ds} = -\beta nr\dot{\theta}\cos\gamma = \mathtt{constant} \qquad (5)$$

Considering the radial direction of (2), we can write for an azimuthal GRIN fibre,

$$\frac{d}{ds}\left(n\frac{dr}{ds}\right) - nr\left(\frac{d\theta}{ds}\right)^2 = 0 \qquad (6)$$

Noting that $\dfrac{dn}{ds} = \dfrac{dn}{d\theta}\dfrac{d\theta}{ds}$, using identity (3) where appropriate, and that (5) indicates that $\dfrac{d^2r}{ds^2} = 0$, equation (6) can be rearranged to yield $dn(\theta)=-d\theta/\beta$, which when integrated shows the azimuthal refractive index variation must be linear, $n(\theta)=n_2-\theta/\beta$, which is the same as for a spiral phase plate. Considering the azimuthal direction of (2), we have

$$n\frac{dr}{ds}\frac{d\theta}{ds} + \frac{d}{ds}\left(nr\frac{d\theta}{ds}\right) = \frac{l}{r}\frac{dn}{d\theta} \qquad (7)$$

For handedness preservation we only require one complete turn of the spiral trajectory along the fibre length $Z$, i.e. chiral guiding can be weak. This means that the refractive index difference denoting the discontinuity can tend to zero for arbitrary increasing length of fibre, i.e. $dn/n \to 0\,|\,\lim\limits_{z\to\infty}$. This is as required to be consistent with equation (7) being satisfied.

Considering equation (5), since $\beta$ is a constant for a given azimuthal GRIN fibre, and for a given OAM of the light, $n\dot{\theta}r^2$, the angle $\gamma$ of the helix is determined by the constant and radius r. Equation (5) indicates that for an azimuthal GRIN variation $n(\theta)=n_2-\theta/\beta$, and for a positive (i.e. right-handed) OAM (determined by the sign of $\dot{\theta}$), the radius of the trajectory will tend to decrease. In contrast, a left-handed (anti-clockwise) OAM will cause the radius of the trajectory to steadily increase until the trajectory exceeds the radius of the fibre, and the light will radiate out. Hence left-handed light is not guided by this azimuthal fibre, but is radiated away.

For the right-handed light, the radius will decrease with the light remaining within the fibre and hence being guided. However, the radius of the light can only decrease to a finite minimum value, due to the uncertainty principle. For a helical trajectory, the angular speed is given by $\dot{\theta}=2\pi/H$, where $H$ is the helix pitch. Since the OAM is a constant, the minimum radius is therefore given by $r_0 = \dfrac{l}{2\pi}\sqrt{\dfrac{\lambda H}{n(\theta)}}$, where $l$=1 (c.f. equation 4), and $\lambda$ is the wavelength of the light. As can be seen, the helix radius depends on the azimuthal refractive index. Hence at the index discontinuity, the helix radius must also shift radially in order for OAM to be conserved, as indicated in Fig.4(b). This can be considered to be analogous to the optical Hall effect. A stable trajectory requires a 2n phase increment for each loop around the fibre, i.e. the trajectory length for each circuit must be an integer number of wavelengths. With regard to Fig. 4(a), this means that the trajectory length for one twist of the helix must be $s = \sqrt{H^2 + \left(2\pi r_0\right)^2} = N\lambda$ , where $N$ is an integer.

Substituting the expression for the minimum radius previously calculated, and considering only positive solutions, requires the helix pitch to be given by:

$$H = \frac{\lambda}{2n}\left\{\sqrt{1 + 4n^2 N^2} - 1\right\} \qquad\qquad (8)$$

It is of interest that the helical pitch is proportional to the period of a conventional first-order Bragg distributed grating.

The chiral counterpart of the fibre of Fig. 1(a) is shown in Fig. 1(b), with the opposite handedness.

The phase singularity at the centre of the fibre geometry implies that there is zero amplitude of the light there (i.e. there is a singularity there, such that a finite amplitude of light cannot exist at the fibre centre). In some embodiments of the invention, there is a region (e.g. a concentric cylinder along the fibre length) of uniform refractive index consisting of either a material of refractive index $n_4$ (or equally, any of the other refractive indices $n_1, n_2, n_3$) or simply air (or a vacuum) similar to hollow-core fibre. Examples of such fibres are shown in Fig. 2. The fibres again have cores 25, 35 with azimuthally varying refractive indices within a uniform refractive-index cladding 10, this time with an additional uniform refractive index region 40 at the centre of the fibre. Figure 2(b) is the oppositely-handed counterpart of the fibre of Figure 2(a).

We also note that although our fibre has chiral properties, it does not necessarily have a twisted geometry itself (apart from the index gradient), i.e. the radial line discontinuity (50;55;60;65) when extended along the fibre axis, remains straight to form a flat plane. Both Figures 1 and 2 show cross-sections of the OAM-conserving fibre. That same cross-section can be assumed to continue uniformly along the entire length of the fibre.

However, in another embodiment (not shown), the radial line discontinuity is twisted along the fibre axis, so that the cross-section rotates (either clock-wise or anti-clockwise) with a certain pitch (or a chirped or aperiodic pitch) along the length of the fibre. The twist may be in the opposite sense to the index gradient.

In another embodiment, equal-length sections of left-handed and right-handed OAM-conserving fibre (twisted or untwisted) are concatenated to make an overall waveguide, and achieve additional novel functionality. In a variant of that embodiment, the equal-length sections are designed to be equivalent to a quarter-period coupling length (e.g. analogous to Bragg phase matching, or propagation mode matching), to provide coupling between different OAM modes (either of same handedness but different integer values of 1, or between two oppositely handed modes.)

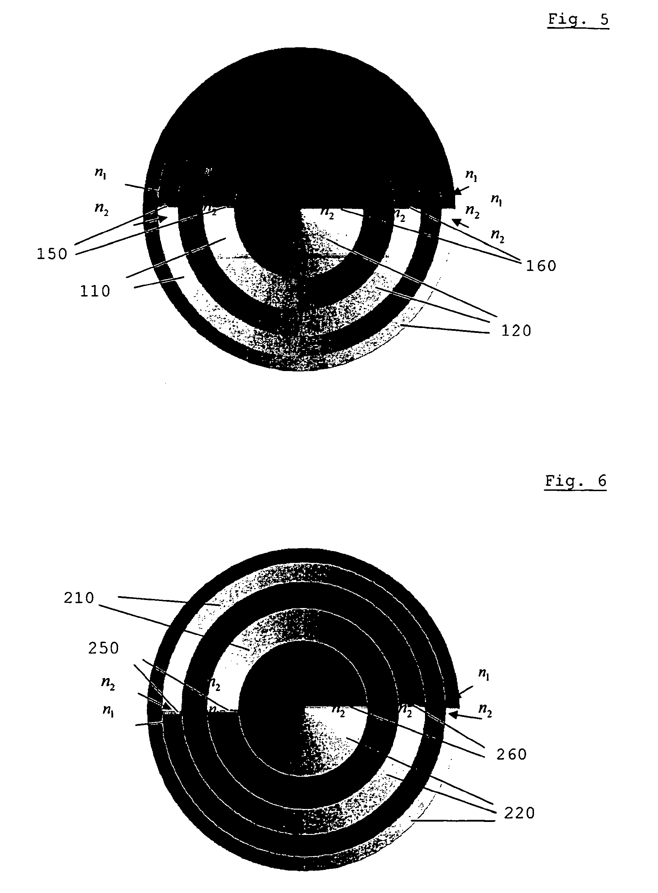

In the embodiment shown in Fig. 5, the azimuthal refractive index variation itself varies radially, forming concentric annuli 110, 120. In a first set of annuli 110, the azimuthal variation begins and ends at a first discontinuity 150 (which is itself discontinuous along a radius of the fibre). In a second set of annuli 120, the annuli of which are alternate with the annuli 110 of the first set at increasing radii, the azimuthal variation begins and ends at a second (discontinuous) discontinuity 160, which is azimuthally displaced by 180 degrees from the first discontinuity 150. The azimuthal variation within the annuli 110 of the first set is also of opposite handedness to the azimuthal variation within the annuli 120 of the second set.

The radii of the annuli 110, 120 are such that the annuli 110, 120 together form the pattern of a Fresnel zone plate. Fresnel zone plates are well known optical devices, which act as a type of lens, focusing light passing through the plate. The Fresnel structure of the Fig. 5 embodiment can itself act to guide light within the fibre; the azimuthal variation of refractive index can also assist in that guidance. However, because the handedness of the variation is different at different radii, other effects can be achieved. For example, higher-order transverse modes of light propagating in the fibre will tend to be larger in transverse cross-section than lower-order transverse modes. Different modes propagating in the fibre of Fig. 5 therefore impinge on different annuli 110, 120; as the handedness of the index variation is of an opposite sense in adjacent annuli 110,120, modes of the same OAM will experience different loss, depending on the extent to which the net effect of the annuli 110,120 by which they are affected tends to expel them from or confine them within the fibre. The fibre may thus act as a mode filter.

The fibre of the embodiment of Fig. 6 also comprises annular rings 210, 220, forming the pattern of a Fresnel zone plate. As in Fig. 5, the index discontinuity 250, 260 of each annulus 210, 220 is displaced by 180 degrees from that of its neighbour; however, in this case, the azimuthal variation is of the same handedness in each annulus 210,220.

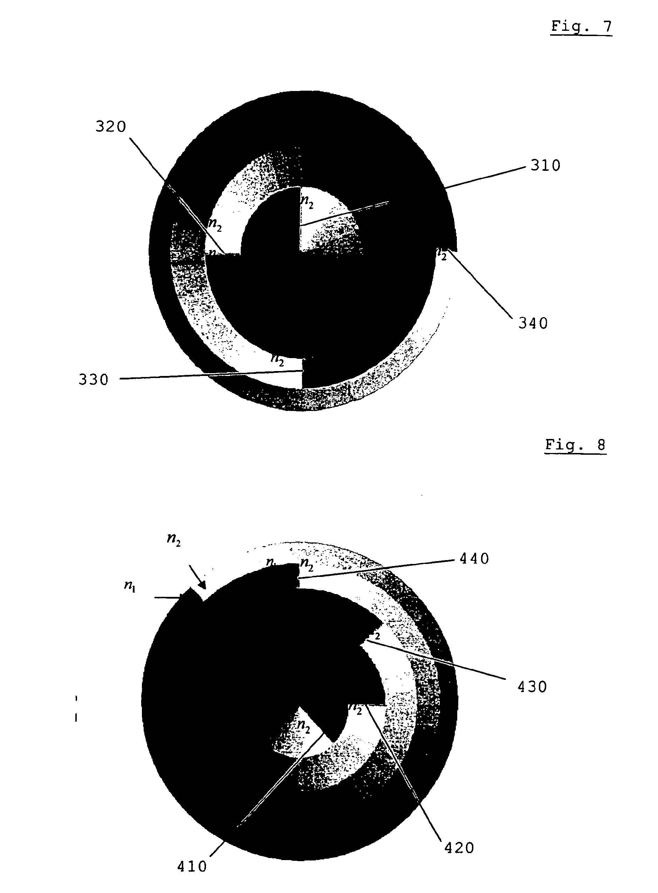

The fibres of the embodiments of Figs. 7 and 8 also comprises annuli forming the pattern of a Fresnel zone plate. As in Fig. 6, the index variation is of the same handedness in each annulus. In Fig. 7, the index discontinuities 310, 320, 330, 340 in successive annuli, moving radially out from the centre are displaced in this embodiment by 90 degrees. In Fig. 8, index discontinuities 410, 420, 430, 440 in successive annuli are displaced by 45 degrees.

The 'handedness' dependency of waveguides according to the invention, examples of which are described above, may find applications in important emerging encryption techniques, such as physical layer data keys. In addition, our fibre can provide a means to flexibly guide OAM light in situations such as optical tweezers.

**Claims**

1.  An optical waveguide comprising a core (20;25;30;35), said core (20;25;30;35) having a refractive index that includes a radial discontinuity (50; 55; 60; 65; 150, 160; 250, 260; 310, 320, 330, 340; 410, 420, 430, 440) **characterised in that** the refractive index varies continuously, with increasing azimuthal angle θ, from a first value $n_2$ at a first side of the discontinuity (50;55;60;65;150,160;250,260;310,320,330,340;410,420,430, 440) to a second value $n_1$ at a second side of the discontinuity (50; 55; 60; 65; 150, 160; 250, 260; 310, 320, 330, 340; 410, 420, 430, 440).

2.  A waveguide as claimed in claim 1, in which the variation in refractive index is monotonic with azimuthal angle, over 360 degrees, from the first value $n_2$ to the second value $n_1$.

3.  A waveguide as claimed in claim 2, in which the variation is linear with azimuthal angle, over 360 degrees, from the first value $n_2$ to the second value $n_1$.

4.  A waveguide as claimed in any preceding claim, further comprising a region (40) into which the discontinuity (60; 65) does not extend, at or substantially at the centre of the core (25;35).

5.  A waveguide as claimed in any preceding claim, in which the discontinuity (50;55;60;65;150,160;250,260; 310,320,330,340;410,420,430,440) is uniform along the length of the waveguide.

6.  A waveguide as claimed in any of claims 1 to 4, in which the discontinuity (50;55;60;65;150,160;250,260; 310,320,330,340;410,420,430,440) rotates along the whole or part of the length of the waveguide.

7.  A waveguide as claimed in any of claims 1 to 4, in which the waveguide comprises a first longitudinal section in which the index variation from $n_2$ to $n_1$ has a first handedness and a second longitudinal section in which the index variation from $n_2$ to $n_1$ has a second, opposite, handedness.

8.  A waveguide as claimed in claim 7, in which there is a plurality of pairs of the oppositely handed sections.

9.  A waveguide as claimed in claim 8, in which equal lengths of the oppositely handed sections are concatenated to form the waveguide.

10. A waveguide as claimed in any preceding claim, in which the refractive index of the waveguide varies radially.

11. A waveguide as claimed in claim 10, in which the refractive-index variation results in concentric zones in the transverse cross-section of the fibre.

12. A waveguide as claimed in claim 11, in which the concentric zones are annuli (110;120;210;220).

13. A waveguide as claimed in claim 12, in which the annuli are of equal width and form a Bragg zone plate.

14. A waveguide as claimed in claim 12, in which successive annuli (110,120;210,220) are of decreasing width, and the zones form a Fresnel zone plate.

15. A waveguide as claimed in any preceding claim, in which there is a plurality of radial discontinuities (150, 160; 250,260;310,320,330,340;410,420,430,440).

16. A waveguide as claimed in claim 15, in which the radial discontinuities (150,160;250,260;310,320, 330,340; 410,420,430,440) are at different azimuthal angles.

17. A waveguide as claimed in claim 15 or claim 16, in which there is a refractive-index variation resulting in concentric zones (110,120;210,220) in the transverse cross-section of the fibre and the radial discontinuities (150,160;250,260;

310,320,330,340;410,420,430,440) are in different zones.

18. A method of transmitting light having a left- or right-handed non-zero orbital angular momentum, the method being **characterised by** introducing the light into a waveguide as claimed in any preceding claim, the variation of refractive index with increasing azimuthal angle being such as to support propagation of light having the handedness of the transmitted light.

**Patentansprüche**

1. Optischer Wellenleiter, der einen Kern (20;25;30;35) aufweist, wobei der Kern (20;25;30;35) einen Brechungsindex aufweist, der eine radiale Unstetigkeit (50;55;60;65;150,160;25.0,260;310;320,330,340;410,420, 430,440) aufweist, **dadurch gekennzeichnet, dass** der Brechungsindex kontinuierlich variiert, mit zunehmenden Azimutwinkel $\theta$, von einem ersten Wert $n_2$ an einer ersten Seite der Unstetigkeit (50;55;60;65;150,160;250,260; 310;320,330,340; 410,420, 430,440) bis zu einem zweiten Wert $n_1$ an einer zweiten Seite der Unstetigkeit (50;55;60;65;150,160; 250,260;310;320,330,340;410,420, 430,440).

2. Wellenleiter nach Anspruch 1, bei welchem die Variation des Brechungsindex monoton in Abhängigkeit von dem Azimutwinkel ist, über 360 Grad, vor dem ersten Wert $n_2$ zu dem zweiten Wert $n_1$.

3. Wellenleiter nach Anspruch 2, bei welchem die Variation linear in Abhängigkeit von dem Azimutwinkel ist, über 360 Grad, von dem ersten Wert $n_2$ zu dem zweiten Wert $n_1$.

4. Wellenleiter nach einem der voranstehenden Ansprüche, bei welchem weiterhin ein Bereich (40) vorgesehen ist, in welchen sich die Unstetigkeit (60,65) nicht erstreckt, direkt oder im Wesentlichen im Zentrum des Kerns (25,35).

5. Wellenleiter nach einem der voranstehenden Ansprüche, bei welchem die Unstetigkeit (50;55;60;65;150,160;250, 260;310;320,330,340;410,420,430,440) gleichmäßig entlang der Länge des Wellenleiters ist.

6. Wellenleiter nach einem der Ansprüche 1 bis 4, bei welchem sich die Unstetigkeit (50;55;60;65;150,160;250, 260; 310;320,330,340;410,420,430,440) entlang der gesamten Länge oder einem Teil der Länge des Wellenleiters erstreckt.

7. Wellenleiter nach einem der Ansprüche 1 bis 4, bei welchem der Wellenleiter einen ersten Abschnitt in Längsrichtung aufweist, bei welchem die Indexänderung von $n_2$ bis $n_1$ eine erste Händigkeit aufweist, und einen zweiten Abschnitt in Längsrichtung, bei welchem die Indexänderung von $n_2$ bis $n_1$ eine zweite, entgegengesetzte Händigkeit aufweist.

8. Wellenleiter nach Anspruch 7, bei welchem mehrere Paare der entgegengesetzten händigen Abschnitte vorhanden sind.

9. Wellenleiter nach Anspruch 8, bei welchem gleiche Längen der entgegengesetzt händigen Abschnitte verkettet sind, um den Wellenleiter auszubilden.

10. Wellenleiter nach einem der voranstehenden Ansprüche, bei welchem der Brechungsindex des Wellenleiters sich in Radialrichtung ändert.

11. Wellenleiter nach Anspruch 10, bei welchem die Änderung des Brechungsindex zu konzentrischen Zonen im Schnitt in Querrichtung der Faser führt.

12. Wellenleiter nach Anspruch 11, bei welchem die konzentrischen Zonen Kreisringe (110;120;210;220) sind.

13. Wellenleiter nach Anspruch 12, bei welchem die Kreisringe gleiche Breite aufweisen, und eine Bragg-Zonenplatte bilden.

14. Wellenleiter nach Anspruch 12, bei welchem aufeinander folgende Kreisringe (110,120;210,220) eine abnehmende Breite aufweisen, und die Zonen eine Fresnel-Zonenplatte bilden.

15. Wellenleiter nach einem der voranstehenden Ansprüche, bei welcher mehrere Unstetigkeiten (150,160;250,260;

310,320,330,340;410,420,430,440) in Radialrichtung vorhanden sind.

**16.** Wellenleiter nach Anspruch 15, bei welchem die Unstetigkeiten (150,160;250,260;310,320,330,340; 410,420,430,440) in Radialrichtung auf unterschiedlichen Azimutwinkeln liegen.

**17.** Wellenleiter nach Anspruch 15 oder 16, bei welchem eine Änderung des Brechungsindex vorhanden ist, die zu konzentrischen Zonen (110,120;210,220) im Querschnitt in Querrichtung der Faser führt, und die Unstetigkeiten (150,160;250,260;310,320,330,340; 410,420,430,440) in Radialrichtung in unterschiedlichen Zonen liegen.

**18.** Verfahren zur Übertragung von Licht, das einen links- oder rechtshändigen Bahndrehimpuls ungleich Null aufweist, wobei das Verfahren **dadurch gekennzeichnet ist, dass** das Licht in einen Wellenleiter nach einem der voranstehenden Patentansprüche eingeführt wird, wobei die Änderung des Brechungsindex in Abhängigkeit vom zunehmenden Azimutwinkel so ist, dass die Ausbreitung von Licht unterstützt wird, welches die Händigkeit des übertragenen Lichts aufweist.


## Revendications

**1.** Guide d'ondes optique comprenant un noyau (20 ; 25 ; 30 ; 35), ledit noyau (20 ; 25 ; 30 ; 35) ayant un indice de réfraction qui comprend une discontinuité radiale (50 ; 55 ; 60 ; 65 ; 150, 160 ; 250, 260 ; 310, 320, 330, 340 ; 410, 420, 430, 440), **caractérisé en ce que** l'indice de réfraction varie en continu, avec une augmentation de l'angle azimutal θ, entre une première valeur $n_2$ au niveau d'un premier côté de la discontinuité (50 ; 55 ; 60 ; 65 ; 150, 160 ; 250, 260 ; 310, 320, 330, 340 ; 410, 420, 430, 440) et une seconde valeur $n_1$ au niveau d'un second côté de la discontinuité (50 ; 55 ; 60 ; 65 ; 150, 160 ; 250, 260 ; 310, 320, 330, 340 ; 410, 420, 430, 440).

**2.** Guide d'ondes selon la revendication 1, dans lequel la variation d'indice de réfraction est monotone avec un angle azimutal, supérieur à 360 degrés, entre la première valeur $n_2$ et la seconde valeur $n_1$.

**3.** Guide d'ondes selon la revendication 2, dans lequel la variation est linéaire avec un angle azimutal, supérieur à 360 degrés, entre la première valeur $n_2$ et la seconde valeur $n_1$.

**4.** Guide d'ondes selon l'une quelconque des revendications précédentes, comprenant en outre une région (40) dans laquelle la discontinuité (60 ; 65) ne s'étend pas, au niveau de ou sensiblement au niveau du centre du noyau (25 ; 35).

**5.** Guide d'ondes selon l'une quelconque des revendications précédentes, dans lequel la discontinuité (50 ; 55 ; 60 ; 65 ; 150, 160 ; 250, 260 ; 310, 320, 330, 340 ; 410, 420, 430, 440) est uniforme le long de la longueur du guide d'ondes.

**6.** Guide d'ondes selon l'une quelconque des revendications 1 à 4, dans lequel la discontinuité (50 ; 55 ; 60 ; 65 ; 150, 160 ; 250, 260 ; 310, 320, 330, 340 ; 410, 420, 430, 440) tourne le long de la totalité de ou d'une partie de la longueur du guide d'ondes.

**7.** Guide d'ondes selon l'une quelconque des revendications 1 à 4, dans lequel le guide d'ondes comprend une première section longitudinale dans laquelle la variation d'indice entre $n_2$ et $n_1$ possède un premier sens de rotation et une seconde section longitudinale dans laquelle la variation d'indice entre $n_2$ et $n_1$ possède un second sens de rotation opposé.

**8.** Guide d'ondes selon la revendication 7, dans lequel il existe une pluralité de paires de sections tournées de manière opposée.

**9.** Guide d'ondes selon la revendication 8, dans lequel des longueurs égales des sections tournées de manière opposées sont concaténées afin de former le guide d'ondes.

**10.** Guide d'ondes selon l'une quelconque des revendications précédentes, dans lequel l'indice de réfraction du guide d'ondes varie radialement.

**11.** Guide d'ondes selon la revendication 10, dans lequel la variation de l'indice de réfraction entraîne des zones concentriques dans la section transversale de la fibre.

**12.** Guide d'ondes selon la revendication 11, dans lequel les zones concentriques sont des parties annulaires (110 ; 120 ; 210 ; 220).

**13.** Guide d'ondes selon la revendication 12, dans lequel les parties annulaires sont de largeur égale et forment une plaque de zone de Bragg.

**14.** Guide d'ondes selon la revendication 12, dans lequel des parties annulaires successives (110, 120 ; 210, 220) possèdent une largeur qui diminue, et les zones forment une plaque de zone de Fresnel.

**15.** Guide d'ondes selon l'une quelconque des revendications précédentes, dans lequel il existe une pluralité de discontinuités radiales (150, 160 ; 250, 260 ; 310, 320, 330, 340 ; 410, 420, 430, 440).

**16.** Guide d'ondes selon la revendication 15, dans lequel les discontinuités radiales (150, 160 ; 250, 260 ; 310, 320, 330, 340 ; 410, 420, 430, 440) sont à des angles azimutaux différents.

**17.** Guide d'ondes selon la revendication 15 ou la revendication 16, dans lequel il existe une variation d'indice de réfraction entraînant des zones concentriques (110, 120 ; 210, 220) dans la section transversale de la fibre et les discontinuités radiales (150, 160 ; 250, 260 ; 310, 320, 330, 340 ; 410, 420, 430, 440) sont dans des zones différentes.

**18.** Procédé de transmission de la lumière ayant un moment angulaire orbital non nul et de gauche ou de droite, le procédé étant **caractérisé par** l'introduction de la lumière dans un guide d'ondes selon l'une quelconque des revendications précédentes, la variation d'indice de réfraction avec une augmentation de l'angle azimutal étant telle qu'elle permet de supporter la propagation d'une lumière ayant le sens de rotation de la lumière transmise.

Figure 1

Figure 2

Figure 3

(a)

(b)

Fig. 4

$2\pi r$

$rd\theta$

$s = \sqrt{H^2 + (2\pi r)^2}$

ds

$H$  dz

(a)

(b)

$r_0$

Fig. 5

Fig. 6

Fig. 7

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6778747 B